**Europäisches Patentamt**

**European Patent Office**

**Office européen des brevets**

(19)

(11) Veröffentlichungsnummer : **0 149 477 B2**

(12) ## NEUE EUROPÄISCHE PATENTSCHRIFT

(45) Veröffentlichungstag der neuen Patentschrift :
07.10.92 Patentblatt 92/41

(51) Int. Cl.⁵ : **F16K 11/044, E03C 1/04**

(21) Anmeldenummer : **85100236.0**

(22) Anmeldetag : **11.01.85**

(54) **Umstellbetätigungsglied.**

(30) Priorität : **17.01.84 DE 3401352**

(43) Veröffentlichungstag der Anmeldung :
**24.07.85 Patentblatt 85/30**

(45) Bekanntmachung des Hinweises auf die
Patenterteilung :
**14.09.88 Patentblatt 88/37**

(45) Bekanntmachung des Hinweises auf die
Entscheidung über den Einspruch :
**07.10.92 Patentblatt 92/41**

(84) Benannte Vertragsstaaten :
**AT BE CH DE FR GB IT LI NL SE**

(56) Entgegenhaltungen :
**DE-A- 2 125 762**
**DE-A- 2 408 208**

(56) Entgegenhaltungen :
**DE-A- 2 424 044**
**DE-A- 2 922 094**
**DE-C- 2 739 196**
**FR-A- 1 576 074**
**GB-A- 2 121 122**
**US-A- 3 498 546**

(73) Patentinhaber : **FRIEDRICH GROHE**
**AKTIENGESELLSCHAFT**
**Hauptstrasse 137**
**W-5870 Hemer (DE)**

(72) Erfinder : **Geipel, Werner**
**Zur Sonnenhöhe 81**
**W-5860 Iserlohn (DE)**
Erfinder : **Heimann, Bruno**
**Bredde 20**
**W-5758 Fröndenberg-Ardey (DE)**
Erfinder : **Grendel, Vinzenz**
**Friedensstrasse 5**
**W-5870 Hemer (DE)**

EP 0 149 477 B2

**Beschreibung**

Die Erfindung betrifft eine sanitäre Mischbatterie oder Badewannenauslaufarmatur mit einem Betätigungsglied für ein Umstellventil zur wahlweisen Umstellung des ausfließenden Wassers in den Badewannen- oder Brauseauslauf mit einer aus einem Gehäuse herausgeführten Betätigungsstange, mit der durch Axialverschiebung die Stellbewegung auf den Umstellventilkörper übertragbar ist.

Eine derartige Einrichtung ist aus der DE-C-27 39 196 bekannt, wobei die Betätigung durch ein Griffstück unmittelbar durch Schieben oder Ziehen über die Ventilstange übertragen wird. Hierbei wird es häufig als nachteilig empfunden, daß das Griffstück relativ weit aus dem Gehäuse vorsteht und vielfach auch eine relativ hohe Betätigungskraft erforderlich ist. Ferner ist aus der FR-A-1 576 074 ein Umschaltventil bekannt, bei dem ein etwa um eine senkrechte Achse zum Mischventilgehäuse verschwenkbarer Hebel vorgesehen ist. Der Schwenkhebel ist dabei mit einer kugelförmigen Verdickung im Mischventilgehäuse gelagert und steht mit einem inneren Hebelarm im Wasserbereich des Mischventils mit dem Ventilkörper in Eingriff, während er an seiner äußeren, aus dem Mischventilgehäuse vorstehenden Hebelarm einen vorkragenden Handgriff trägt.

Außerdem ist aus der DE-A-24 08 208 eine Mischbatterie für Kalt- und Warmwasser bekannt, bei der zwei in Form von Hohlkolbenschieber ausgebildete, mit Hilfe von Kipphebeln betätigbare Drucktastenventile vorgesehen sind. Die beiden Kipphebel sind hierbei jeweils mit einem laschenartigen Lenker mit einem Hohlkolben verbunden. Zur Lagerung der Kipphebel ist ein weit vorkragender Ständer einstückig am Gehäuse angeformt. Die Ausbildung dieses Ständers am Gehäuse ist aufwendig und erfordert darüber hinaus eine zusätzliche seitliche Abdeckung. Schließlich ist durch die DE-A-29 22 094 eine Handbrause bekannt, bei der für einen wahlweise zentral oder peripher aus dem Brausekopf austretenden Brausestrahl eine Umstellvorrichtung im Brausekopf vorgesehen ist. Zur Betätigung der Umstellvorrichtung ist eine Wippe auf am Brausekopf ausgebildeten Stützschneiden vorgesehen, wobei die Wippe mit einem Längsbolzen an einem Stößel des Ventils verbunden ist.

Der Erfindung liegt die Aufgabe zugrunde, eine sanitäre Mischbatterie oder Badewannenauslaufarmatur mit einem Betätigungsglied für ein Umstellventil zu schaffen, das nur verhältnismäßig geringe Betätigungskräfte erfordert und im wesentlichen nicht aus dem Armaturengehäuse vorsteht, wobei die Mischbatterie oder Badewannenauslaufarmatur leicht herrustellen ist.

Diese Aufgabe wird erfindungsgemäß durch die im kennzeichnenden Teil des Anspruchs 1 angegebenen Merkmale gelöst. Weitere Ausgestaltungen der Erfindung sind in den Ansprüchen 2 bis 8 angegeben. Die mit der Erfindung erzielbaren Vorteile bestehen insbesondere darin, daß durch die Anordnung des Betätigungshebels das Betätigungsglied weitgehend in das Armaturengehäuse integriert werden kann, da die Umstellung nunmehr allein durch Druckbetätigungen an den entsprechenden Bereichen des Betätigungshebels erfolgen kann. Durch eine entsprechende Bemessung des Betätigungshebels bzw. der Hebelarme können die normalerweise erforderlichen Betätigungskräfte wesentlich verkleinert werden, so daß auch Kinder das Umstellventil recht einfach bedienen können.

Ein Ausführungsbeispiel der Erfindung ist in der Zeichnung dargestellt und wird im folgenden näher beschrieben. Es zeigt

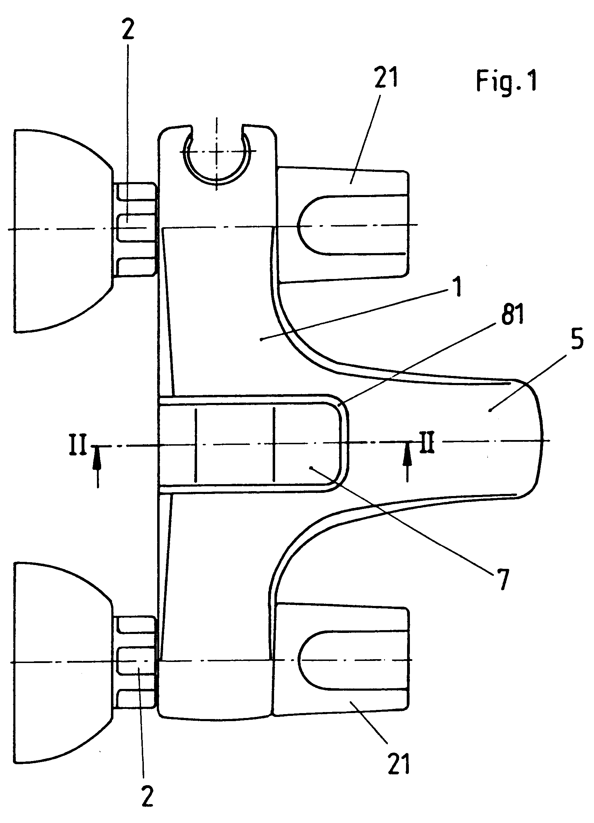

Figur 1 eine Mischbatterie für Badewannen und brausen in Draufsicht;

Figur 2 die Mischbatterie gemäß Figur 1 in der Schnittebene II;

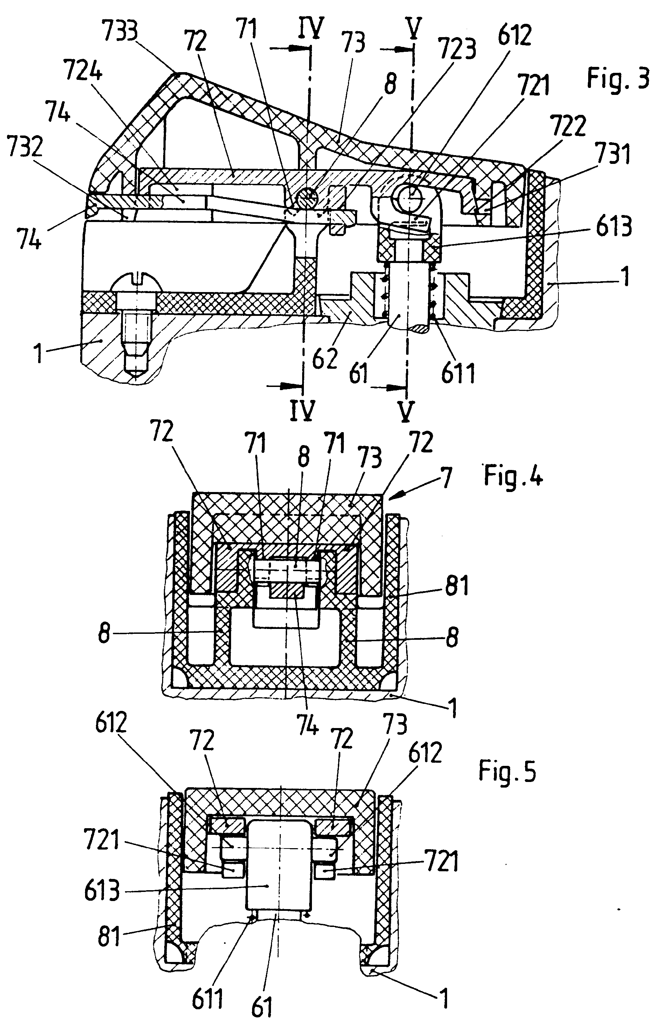

Figur 3 ein Betätigungsglied gemäß Figur 2 in vergrößertem Maßstab;

Figur 4 das Betätigungsglied gemäß Figur 3 in der Schnittebene IV und

Figur 5 das Betätigungsglied gemäß Figur 3 in der Schnittebene V.

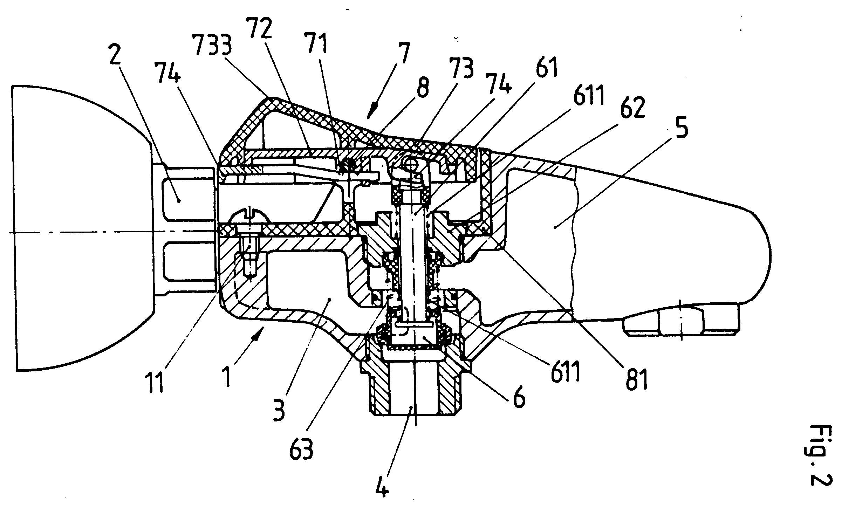

Die in der Zeichnung dargestellte Mischbatterie wird im wesentlichen gebildet von einem Gehäuse 1, Anschlüssen 2 für die Kalt- und Warmwasserversorgung, den Kalt- und Warmwasserdosierventilen mit je einem Griffstück 21, einem brauseauslauf 4, einem Wannenauslauf 5 sowie einem Umstellventil 6. Das zufließende Warm- und Kaltwasser wird dabei im Gehäuse 1 angeordneten Mischraum 3 zu temperiertem Wasser gemischt. In der in Figur 2 gezeigten Stellung des Umstellventils strömt das gemischte Wasser in den Wannenauslauf 5. Das Umstellventil 6 kann mit Hilfe einer Betätigungsstange 61 durch eine Axialbewegung den Wannenauslauf absperren und gibt hierbei gleichzeitig den brauseauslauf 4 für den Wasserdurchtritt frei. Das Umstellventil 6 wird während des Brausevorgangs durch den Staudruck des Wassers in dieser Stellung gehalten, während die Betätigungsstange 61 durch die Rückstellfedern 611 in eine neutrale Stellung zurückgeführt wird. Wird dagegen der Wasserzulauf mit den Griffstükken 21 abgesperrt, so sinkt der Staudruck, und eine Rückstellfeder 63 drückt das Umstellventil 6 in seine bevorzugte Stellung, nämlich die Wannenauslaufstellung, zurück. Soll noch während des Brausevorgangs eine Umstellung auf Wannenauslauf erfolgen, so kann mit der Betätigungsstange der Staudruck des Wassers überwunden werden und eine entsprechende Umstellung erfolgen.

Das Umstellventil 6 ist mit einem Umstellventiloberteilgehäuse 62 in das Gehäuse 1 der Mischbatterie eingeschraubt. An dem vorstehenden Ende der Betätigungsstange 61 ist ein Kopfstück 613 radial aufgeschnappt, wobei das Kopfstück 613 eine Querstange 612 zur Anlenkung eines Betätigungshebels 7 trägt. In einer Ausnehmung des Gehäuses 1 ist ein schachtelförmiges, an der hinteren Seitenwand offenes Passteil 81 eingesetzt und mit Hilfe des Umstellventiloberteilgehäuses 62 fixiert. In dem Paßteil 81 ist ein horizontal angeordnetes Drehlager 8 ausgebildet, auf dem ein Tragkörper 72 mit einer Schnappverbindung 71 drehbar verbunden und über parallel angeordneten Gabeln 721 mit dem Kopfstück 613 der Betätigungsstange 61 gekoppelt ist. Auf dem Tragkörper 72 ist eine Betätigungshaube 73 angeordnet, die den Tragkörper mit Seitenwandungen umfaßt, wobei im Bereich der Gabel 721 der Tragkörper 72 eine vorstehende Zinke 722 hat, die in einen Schlitz 731 der Betätigungshaube 73 einfaßt und an der gegenüberliegenden Seite Schnappzungen 732 der Betätigungshaube 73 den Tragkörper 72 untergreifen und somit beide Teile fest miteinander verbinden. Zur Sicherung der Schnappverbindung 71 am Drehlager 8 ist eine Lasche 74 von der offenen, hinteren Seitenwand des Paßteils 81 her durch Führungen 724 und hinter der Schnappverbindung 71 in einer entsprechenden Öffnung 723 im Tragkörper 72 eingeschoben, wodurch eine Verriegelung der Schnappverbindung 71 bewirkt wird. Zur weiteren Sicherung des Betätigungsgliedes in dem Gehäuse 1 ist ferner das Paßteil 81 mit einer Schraube 11 befestigt.

Wie insbesondere aus Figur 2 ersichtlich, ist das Betätigungsglied im wesentlichen in dem Gehäuse 1 der Mischbatterie integriert. Lediglich die Betätigungshaube 73 ragt mit einem dachförmig ausgebildeten betätigungsbereich 733 geringfügig aus der Oberfläche des Gehäuses hervor. Wird nun mit der Hand auf diesem bevorzugten betätigungsbereich 733 ein Druck aufgebracht, so wird der Betätigungshebel 7 in diesem Bereich in das Gehäuse 1 eingeschoben und hebt dabei mit der Gabel 721 das Umstellventil 6 vom Ventilsitz ab, so daß nunmehr der Brauseauslauf freigegeben wird und der sich aufbauende Wasserdruck das Ventil in dieser Stellung verharren läßt. Wird hiernach der Betätigungsdruck von dem Betätigungshebel 7 zurückgenommen, so drücken die Rückstellfedern 611 über die Betätigungsstange 61 den Betätigungshebel 7 wieder in seine neutrale Stellung zurück. Soll dagegen während des Brausevorganges erneut auf den Wannenauslauf umgeschaltet werden, so ist es lediglich erforderlich, auf den vorderen, etwa in der Ebene des Gehäuses 1 befindlichen Bereich des Betätigungshebels 7 einen entsprechenden Druck aufzubringen, und das Umstellventil 6 leitet das Wasser erneut in den Wannenauslauf. Nach jeder Betätigung wird der Betätigungshebel 7 in seine neutrale Mittelposition zurückgeführt.

## Patentansprüche

1. Sanitäre Mischbatterie oder Badewannenauslaufarmatur nach Anspruch 1, dadurch gekennzeichnet, daß das Paßteil (81) zur hinteren Seitenwand offen ausgebildet ist.

2. Sanitäre Mischbatterie oder Badewannenauslaufarmatur mit einem Betätigungsglied für ein Umstellventil (6) zur wahlweisen Umstellung des ausfließenden Wassers in den Badewannen- oder Brauseauslauf mit einer aus einem Gehäuse (1) herausgeführten Betätigungsstange (61), mit der durch Axialverschiebung die Stellbewegung auf den Umstellventilkörper übertragbar ist, dadurch gekennzeichnet, daß die Betätigungsstange (61) mit ihrem aus dem Gehäuse (1) herausgeführten Ende mit einem an einem Drehlager (8) verschwenkbar befestigten Betätigungshebel (7) verbunden ist, wobei das Drehlager (8) an einem Schachtelförmigen Paßteil (81) ausgebildet ist, welches in einer entsprechend bemessenen Ausnehmung im Gehäuse (1) befestigbar ist, und daß der verschwenkbare Betätigungshebel (7) mit einer Schnappverbindung (71) auf dem Drehlager (8) fixierbar ist, wobei die Öffnung des schachtelförmigen Paßteils (81) durch den Betätigungshebel (7) im wesentlichen verdeckt ist, so daß der Betätigungshebel (7) zu beiden Seiten des Drehlagers (8) für Handbetätigungen zugänglich ist und im wesentlichen nicht aus dem Gehäuse (1) vorsteht.

3. Sanitäre Mischbatterie oder Badewannenauslaufarmatur nach Anspruch 1 oder 2, dadurch gekennzeichnet, daß das Paßteil (81) von einem Umstellventiloberteilgehäuse (62) in der Ausnehmung im Gehäuse (1) fixiert ist.

4. Sanitäre Mischbatterie oder Badewannenauslaufarmatur nach Ansprüche 1 bis 3, dadurch gekennzeichnet, einem der daß der Betätigungshebel (7) aus einem Tragkörper (72), an dem die Schnappverbindung (71) für das Drehlager (8) und eine Gabel (721) zur Anlenkung der Betätigunsstange (61) ausgebildet sind, und einer Betätigungshaube (73) oder Taste besteht.

5. Sanitäre Mischbatterie oder Badewanneauslaufarmatur nach Anspruch 4, dadurch gekennzeichnet, daß der Tragkörper (72) von der Betätigungshaube (73) umfaßt wird, wobei im Bereich der Gabel (721) wenigstens eine vorstehende Zinke (722) an dem Tragkörper (72) ausgebildet ist, die in einen Schlitz (731) der Betätigungshaube (73) einfaßt, und an der gegenüberliegenden Seite Schnappzungen (732) den Tragkörper (72) untergreifen und somit beide Teile fest miteinander verbunden sind.

6.  Sanitäre Mischbatterie oder Bodewannenauslaufarmatur nach Ansprüche 1 bis 5, dadurch gekennzeichnet, einem der daß die Schnappverbindung (71) mittels eines von der offenen, hinteren Seitenwand des Paßteils (81) her eingebrachten, durch Führungen (724) gehalterten und hinter der Schnappverbindung (71) in einer entsprechenden Öffnung (723) im Tragkörper (72) verrasteten Lasche (74) verriegelt ist.

7.  Sanitäre Mischbatterie oder Badewannenauslaufarmatur nach den Ansprüchen 4 und 5, dadurch gekennzeichnet, daß die Betätigungshaube (73) im bevorzugten Betätigungsbereich (733) dachförmig aus dem Paßstück (81) vorsteht.

8.  Sanitäre Mischbatterie oder Badewannenauslaufarmatur nach Anspruch 4, dadurch gekennzeichnet, daß die Gabel (721) als Doppelgabel ausgebildet ist und ein radial auf der Betätigungsstange (61) aufgeschnapptes Kopfstück (613) aufnimmt, das mittels einer Querstange (612) die Stellbewegungen vom Betätigungshebel (7) auf das Umstellventil überträgt.

## Claims

1.  A sanitary mixer tap or bath tub outlet fitting with an actuating member for a change-over valve (6) for selective change-over of the emerging water into the bath outlet or shower outlet, with an actuating rod (61) guided out of a housing (1), by axial displacement of which actuating rod the adjusting movement is transferrable to the change-over valve body, characterized in that the actuating rod (61) is connected with its end guided out of the housing (1) to an operating lever (7) pivotally fastened to a pivot bearing (8), wherein the pivot bearing (8) is constructed on a box-shaped intermediate component (81) which is arranged to be fixed in a correspondingly dimensioned recess in the housing (1), and the pivotable operating lever (7) is fixable by means of a snap-fit connection (71) on the pivot bearing (8), the opening of the box-shaped intermediate component (81) being substantially masked by the operating lever (7), so that the operating lever (7) is accessible for manual operation on both sides of the pivot bearing (8), and does not protrude substantially from the housing (1).

2.  A sanitary mixer tap or bath tub outlet fitting according to claim 1, characterized in that the intermediate component (81) is constructed so that it is open towards its rear side wall.

3.  A sanitary mixer tap or bath tub outlet fitting according to claim 1 or 2, characterized in that the intermediate component (81) is fixed by a housing (62) of the change-over valve upper part in the recess in the housing (1).

4.  A sanitary mixer tap or bath tub outlet fitting according to one of claims 1 to 3, characterized in that the operating lever (7) comprises a bearing member (72), on which are formed the snap-fit connection (71) for the pivot bearing (8) and a fork (721) for attachment of the actuating rod (61), and an actuating dome (73) or button.

5.  A sanitary mixer tap or bath tub outlet fitting according to claim 4, characterized in that the bearing member (72) is enclosed by the actuating dome (73) wherein in the region of the fork (721) there is formed on the bearing body (72) at least one projecting prong (722) which engages in a slot (731) of the actuating dome (73), and, on the opposite side, snap-fit tongues (732) engaged beneath the bearing body (72) and thus both parts are fixedly joined to one another.

6.  A sanitary mixer tap or bath tub outlet fitting according to one of claims 1 to 5, characterized in that the snap-fit connection (71) is locked by means of a catch (74) introduced from the open rearward side wall of the intermediate component (81), held by guide means (724) and locked behind the snap-it connection (71) in a corresponding opening (723) in the bearing member (72).

7.  A sanitary mixer tap or bath tub outlet fitting according to claims 4 and 5, characterized in that the actuating dome (73) projects in the shape of a roof from the intermediate component (81) in the preferred actuating region (733).

8. A sanitary mixer tap or bath tub outlet fitting according to claim 4, characterized in that the fork (721) is constructed as a double fork and receives a top piece (613) snapped radially onto the actuating rod (61), which top piece by means of a transverse rod (612) transfers the control movements from the operating lever (7) to the change-over valve.


**Revendications**

1°) Mélangeur sanitaire ou robinet de sortie d'eau pour baignoire, comportant un organe de manoeuvre en un clapet inverseur (6) pour faire passer l'eau sélectivement par la sortie de baignoire ou la sortie de douche, comportant une tige de manoeuvre (61) sortant du corps (1), et qui par coulissement axial transmet le mouvement de commande au corps du clapet inverseur, caractérisé en ce que la tige de manoeuvre (61) est reliée par son extrémité sortant du corps (1) à un levier de manoeuvre (7) fixé de manière pivotante à un palier de rotation (8) et le palier de rotation (8) est réalisé sur une pièce d'adaptation (81) en forme de boîte fixée dans une cavité de dimension appropriée du corps (1) et en ce que le levier de manoeuvre (7), basculant, est fixé sur le palier de rotation (8) par une liaison à enclipsage (71), l'ouverture de la pièce (8) en forme de boîte étant couverte pour l'essentiel par le levier de manoeuvre (7) pour que le levier de manoeuvre (7) soit accessible des deux côtés du palier tournant (8) pour une commande à la main et ne soit pratiquement pas en saillie du corps (1).

2°) Mélangeur sanitaire ou d'eau de baignoire selon la revendication 1, caractérisé en ce que la partie adaptée (81) a une paroi arrière ouverte.

3°) Mélangeur sanitaire ou d'eau de baignoire selon la revendication 1 ou 2, caractérisé en ce que la partie d'adaptation (81) est bloquée dans la cavité du boîtier (1) par le boîtier de la partie supérieure (61) du clapet inverseur.

4°) Mélangeur sanitaire ou d'eau de baignoire selon l'une des revendications 1 à 3, caractérisé en ce que le levier de manoeuvre (7) se compose d'un organe de support (72) muni de moyens de liaison à enclipsage (71) pour le palier de rotation (8) et une fourche (721) pour articuler la tige de manoeuvre (61) ainsi que d'une coiffe de manoeuvre (73) ou d'une douche.

5°) Mélangeur sanitaire ou de sortie d'eau de baignoire selon la revendication 4, caractérisé en ce que l'organe de support (72) est entouré par la coiffe de manoeuvre (73) et au niveau de la fourche (721) il y a au moins une dent (722) en saillie, formée sur le corps de support (72) et qui comprend une fente (731) de manoeuvre et sur le côté opposé il y a des languettes d'enclipsage (732) qui viennent prendre par en-dessous l'organe de support (72) en reliant ainsi solidairement les deux parties.

6°) Mélangeur sanitaire ou d'eau de baignoire selon les revendications 1 à 5, caractérisé en ce que la liaison à enclipsage (71) est verrouillée à l'aide d'une patte (74) introduite à travers la paroi arrière ouverte de la pièce d'adaptation (81) en étant maintenue par des moyens de guidage (724) et en s'accrochant derrière la liaison à enclipsage (71) dans une ouverture appropriée (723) de l'organe de support (72).

7°) Mélangeur sanitaire ou d'eau de baignoire selon les revendications 4 et 5, caractérisé en ce que le capot de manoeuvre (73) de la zone de manoeuvre préférentielle (733) est en saillie en forme de toit de la pièce d'adaptation (81).

8°) Mélangeur sanitaire ou d'eau de baignoire selon la revendication 4, caractérisé en ce que la fourche (721) est une double fourche et reçoit une pièce de tête (613) enclipsée radialement sur la tige de manoeuvre (61) et qui transmet à l'aide d'une tige transversale (612), les mouvements de commande du levier de manoeuvre (7) vers le clapet inverseur.

Fig.1

Fig. 2

Fig. 3

Fig. 4

Fig. 5